# EUROPEAN PATENT SPECIFICATION

(11) **EP 3 944 743 B1**
(45) Date of publication and mention of the grant of the patent: **14.05.2025**
(21) Application number: 21729042.8
(22) Date of filing: 24.05.2021
(51) Int. Cl.: H04L 9/40, G06F 21/34, G06F 21/32

(54) **SYSTEM, METHOD AND COMPUTER PROGRAM PRODUCT FOR EFFECTIVE DOCUMENT CAPTURE E.G. DURING ONBOARDING**
SYSTEM, VERFAHREN UND COMPUTERPROGRAMMPRODUKT ZUR EFFEKTIVEN DOKUMENTENERFASSUNG, Z. B. WÄHREND DES ONBOARDINGS
SYSTÈME, PROCÉDÉ ET PRODUIT PROGRAMME D'ORDINATEUR PERMETTANT UNE CAPTURE DE DOCUMENT EFFICACE, PAR EXEMPLE LORS D'UN EMBARQUEMENT

(30) Priority: 14.06.2020 IL 27536420
(43) Date of publication of application: 02.02.2022
(73) Proprietor: Au10tix Ltd., Hod Hasharon 4527708 (IL)
(72) Inventor: AVITAN, Jakob, 8515900 Moshav Tkuma (IL); KOZAKOV, Gabriel, 4439209 Kfar Saba (IL); DRORI, Elyakim Yehuda, 4483000 Shilo (IL); ODED, Doron, 4580800 Tzur Yizhak (IL)
(74) Representative: Zacco GmbH
(86) International application number: PCT/IL2021/050604
(87) International publication number: WO 2021/255720

(56) References cited:
- US-A1- 2019 213 311
- US-B1- 9 875 511

## Description

### FIELD OF THIS DISCLOSURE

The present invention relates generally to electronic processing and more particularly to onboarding.

### BACKGROUND FOR THIS DISCLOSURE

Many digital authentication systems are known, such as the following co-owned patent documents: United States patent 10,440,219, PCT/IL2010/000933 published inter alia as US 2017/0236034, United States patent 10,607,072; US patent 9,406,030; PCT/IL2016/050112 published as WO 2016/139653 , United States patent 10,467,491; United States published patent application US 2019/0019282 and published PCT application WO2020089907.

Remote verification, of end-user identities and ID documents, is becoming increasingly critical e.g. for KYC (know your client) protocol purposes. End-users are typically remote and unsupervised.

Mobile phone cameras are used and accessed in various contexts and for various purposes. The following publication: https://stackoverflow.com/questions/8581081/how-to-access-a-mobiles-camera-from-a-web-appdescribes a technology which accesses mobile camera/s from web-app/s.

This publication: https://apps.apple.com/gb/app/camscanner-pdf-scanner-app/id388627783 describes use of a phone camera "to scan receipts, notes, invoices, whiteboard discussions, business" and describes "batch download PDF files through web application of CS 8".

This publication: https://panasonic.net/cns/pec/support/tel/appalerts/pdf/LinktoCell_InstructionGuide_Go ogle_ver2.pdf describes a "Link to Cell" or Link to Mobile application.

Auto-capture functionality for cameras is known. For example, a camera system might provide real-time detection of edges, fix image skew if any, and capture the image only when a given quality threshold has been achieved. Or, a camera system might automatically enable the flash, if poor illumination is detected, before capturing the image.

US 2019/213311 A1 describes authenticating a user in an authentication system using a computing device configured to capture authentication biometric identity information. The authentication biometric identify information may comprise or be derived from image/s of a user being authenticated and may be compared to root identify biometric information captured from, say, trusted devices located at trusted e.g. governmental locations. Identity verification may occur by comparing the trusted root identify biometric information to the biometric identify information captured during an authentication session. Liveness may be determined to verify the user is a live person e.g. by comparing two images of the user which are captured at different distances from the user. The authentication system may also process images received from the mobile device to ascertain the images are of sufficient quality. For example, images may be checked for blurriness caused by images out of focus or an obscured camera lens. The system may alert that the quality of the images is insufficient or too bright or dark, and may direct the user to adjust, say, focus or exposure or to clean the lens of the camera.

Further prior art is known from US 9 875 511 B1.

### SUMMARY OF CERTAIN EMBODIMENTS

It is an object of the present invention to provide an improved method which supports identity verification for an end user.

The object is satisfied by a method in accordance with the features of claim 1. The invention further relates to a computer program product in accordance with the features of claim 17, and to a system in accordance with the features of claim 18. Preferred embodiments of the present invention are described in the dependent claims.

Certain embodiments of the present invention seek to provide circuitry typically comprising at least one processor in communication with at least one memory, with instructions stored in such memory executed by the processor to provide functionalities which are described herein in detail. Any functionality described herein may be firmware-implemented or processor-implemented as appropriate.

Certain embodiments seek to provide an improved image capturing method in which an end-user receives an indication, within a time-frame short enough to induce the end-user to remain engaged, typically a real time indication, of whether a frame has been satisfactorily captured.

Certain embodiments seek to provide an improved document verification method which includes a document verification stage in which a document image is analyzed and, prior to this stage, a document image quality check which determines whether the document image's quality suffices for the document verification stage and, if not, informs the end-user of the insufficient quality and typically provides at least one indication of how to remedy the insufficient quality in a new document image.

Certain embodiments seek to provide an improved onboarding method which typically does not require the end-user who is onboarding, to download an app onto her or his cellphone.

Certain embodiments seek to provide onboarding which uses a mobile phone/smartphone/cellphone camera rather than a desktop camera, since the former tend to be better quality and/or are more ubiquitous, than the latter.

According to certain embodiments, a desktop sends a link, which guides an end user to a web app, to the end-user's cellphone.

All or any subset of the following features may be provided:
1. Detect ID vs Non-ID rectangles
2. Face detection
3. Image Quality Checks: Reflections, image too dark or blurry
4. Cropping
5. Configurations: e.g. of Thresholds, Timeouts,Retries
6. ability to support plural front end platforms, such as, say, desktop web/mobile web/native apps ios or android) from the same service.
7. minimal size on the frontend / no installation or download is needed on web/ minimal on native apps.

According to certain embodiments, image capture occurs by activating a web camera and prompting the end-user to place his ID document (say) facing the camera i.e. in the camera's field of view.

According to certain embodiments, indications are provided to the end-user as to whether the image suffices, e.g. in quality, for ID verification purposes; these indications are typically provided in real time or in near-real time or within a few seconds or within two minutes or while the end-user waits or within a session with an end-user or in a separate stage which precedes the stages of ID verification and of subsequent transmitting the results or verdict thereof to the end-user.

In all embodiments herein, other than as mentioned herein, image capture may be automatic or manual (user-initiated).

It is appreciated that any reference herein to, or recitation of, an operation being performed is, e.g. if the operation is performed at least partly in software, intended to include both an embodiment where the operation is performed in its entirety by a server A, and also to include any type of "outsourcing" or "cloud" embodiments in which the operation, or portions thereof, is or are performed by a remote processor P (or several such), which may be deployed off-shore or "on a cloud", and an output of the operation is then communicated to, e.g. over a suitable computer network, and used by, server A. Analogously, the remote processor P may not, itself, perform all of the operation and instead, the remote processor P itself may receive output/s of portion/s of the operation from yet another processor/s P', may be deployed off-shore relative to P, or "on a cloud", and so forth.

Also provided, excluding signals, is a computer program comprising computer program code means for performing any of the methods shown and described herein when the program is run on at least one computer; and a computer program product, comprising a typically non-transitory computer-usable or -readable medium e.g. non-transitory computer -usable or -readable storage medium, typically tangible, having a computer readable program code embodied therein, the computer readable program code adapted to be executed to implement any or all of the methods shown and described herein. The operations in accordance with the teachings herein may be performed by at least one computer specially constructed for the desired purposes or general purpose computer specially configured for the desired purpose by at least one computer program stored in a typically non-transitory computer readable storage medium. The term "non-transitory" is used herein to exclude transitory, propagating signals or waves, but to otherwise include any volatile or non-volatile computer memory technology suitable to the application.

Any suitable processor/s, display and input means may be used to process, display e.g. on a computer screen or other computer output device, store, and accept information such as information used by or generated by any of the methods and apparatus shown and described herein; the above processor/s, display and input means including computer programs, in accordance with all or any subset of the embodiments of the present invention. Any or all functionalities of the invention shown and described herein, such as but not limited to operations within flowcharts, may be performed by any one or more of: at least one conventional personal computer processor, workstation or other programmable device or computer or electronic computing device or processor, either general-purpose or specifically constructed, used for processing; a computer display screen and/or printer and/or speaker for displaying; machine-readable memory such as flash drives, optical disks, CDROMs, DVDs, BluRays, magnetic-optical discs or other discs; RAMs, ROMs, EPROMs, EEPROMs, magnetic or optical or other cards, for storing, and keyboard or mouse for accepting. Modules illustrated and described herein may include any one or combination or plurality of: a server, a data processor, a memory/computer storage, a communication interface (wireless (e.g. BLE) or wired (e.g. USB)), a computer program stored in memory/computer storage.

The term "process" as used above is intended to include any type of computation or manipulation or transformation of data represented as physical, e.g. electronic, phenomena which may occur or reside e.g. within registers and /or memories of at least one computer or processor. Use of nouns in singular form is not intended to be limiting; thus the term processor is intended to include a plurality of processing units which may be distributed or remote, the term server is intended to include plural typically interconnected modules running on plural respective servers, and so forth.

The above devices may communicate via any conventional wired or wireless digital communication means, e.g. via a wired or cellular telephone network or a computer network such as the Internet.

The apparatus of the present invention may include, according to certain embodiments of the invention, machine readable memory containing or otherwise storing a program of instructions which, when executed by the machine, implements all or any subset of the apparatus, methods, features and functionalities of the invention shown and described herein. Alternatively or in addition, the apparatus of the present invention may include, according to certain embodiments of the invention, a program as above which may be written in any conventional programming language, and optionally a machine for executing the program such as but not limited to a general purpose computer which may optionally be configured or activated in accordance with the teachings of the present invention. Any of the teachings incorporated herein may wherever suitable operate on signals representative of physical objects or substances.

The embodiments referred to above, and other embodiments, are described in detail in the next section.

Any trademark occurring in the text or drawings is the property of its owner and occurs herein merely to explain or illustrate one example of how an embodiment of the invention may be implemented.

Unless stated otherwise, terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining", "providing", "accessing", "setting" or the like, refer to the action and/or processes of at least one computer/s or computing system/s, or processor/s or similar electronic computing device/s or circuitry, that manipulate and/or transform data which may be represented as physical, such as electronic, quantities e.g. within the computing system's registers and/or memories, and/or may be provided on-the-fly, into other data which may be similarly represented as physical quantities within the computing system's memories, registers or other such information storage, transmission or display devices or may be provided to external factors e.g. via a suitable data network. The term "computer" should be broadly construed to cover any kind of electronic device with data processing capabilities, including, by way of non-limiting example, personal computers, servers, embedded cores, computing system, communication devices, processors (e.g. digital signal processor (DSP), microcontrollers, field programmable gate array (FPGA), application specific integrated circuit (ASIC), etc.) and other electronic computing devices. Any reference to a computer, controller or processor is intended to include one or more hardware devices e.g. chips, which may be co-located or remote from one another. Any controller or processor may for example comprise at least one CPU, DSP, FPGA or ASIC, suitably configured in accordance with the logic and functionalities described herein.

Any feature or logic or functionality described herein may be implemented by processor/s or controller/s configured as per the described feature or logic or functionality, even if the processor/s or controller/s are not specifically illustrated for simplicity. The controller or processor may be implemented in hardware, e.g., using one or more Application-Specific Integrated Circuits (ASICs) or Field-Programmable Gate Arrays (FPGAs) or may comprise a microprocessor that runs suitable software, or a combination of hardware and software elements.

The present invention may be described, merely for clarity, in terms of terminology specific to, or references to, particular programming languages, operating systems, browsers, system versions, individual products, protocols and the like. It will be appreciated that this terminology or such reference/s is intended to convey general principles of operation clearly and briefly, by way of example.

Elements separately listed herein need not be distinct components and alternatively may be the same structure. A statement that an element or feature may exist is intended to include (a) embodiments in which the element or feature exists; (b) embodiments in which the element or feature does not exist; and (c) embodiments in which the element or feature exist selectably e.g. a user may configure or select whether the element or feature does or does not exist.

Any suitable input device, such as but not limited to a sensor, may be used to generate or otherwise provide information received by the apparatus and methods shown and described herein. Any suitable output device or display may be used to display or output information generated by the apparatus and methods shown and described herein. Any suitable processor/s may be employed to compute or generate information as described herein and/or to perform functionalities described herein and/or to implement any engine, interface or other system illustrated or described herein. Any suitable computerized data storage e.g. computer memory may be used to store information received by or generated by the systems shown and described herein. Functionalities shown and described herein may be divided between a server computer and a plurality of client computers. These or any other computerized components shown and described herein may communicate between themselves via a suitable computer network.

The system shown and described herein may include user interface/s e.g. as described herein which may for example include all or any subset of: an interactive voice response interface, automated response tool, speech-to-text transcription system, automated digital or electronic interface having interactive visual components, web portal, visual interface loaded as web page/s or screen/s from server/s via communication network/s to a web browser or other application downloaded onto a user's device, automated speech-to-text conversion tool, including a front-end interface portion thereof and back-end logic interacting therewith. Thus the term user interface or "ui" as used herein includes also the underlying logic which controls the data presented to the user e.g. by the system display and receives and processes and/or provides to other modules herein, data entered by a user e.g. using her or his workstation/device.

### BRIEF DESCRIPTION OF THE DRAWINGS

Example embodiments are illustrated in the various drawings. Specifically:
Fig. 1 is a table showing example frames; and
Fig. 2 is an example document capture software architecture.

Certain embodiments of the present invention are illustrated in the following drawings; in the block diagrams, arrows between modules may be implemented as APIs and any suitable technology may be used for interconnecting functional components or modules illustrated herein in a suitable sequence or order e.g. via a suitable API/Interface. For example, state of the art tools may be employed, such as but not limited to Apache Thrift and Avro which provide remote call support. Or, a standard communication protocol may be employed, such as but not limited to HTTP or MQTT, and may be combined with a standard data format, such as but not limited to JSON or XML.

Methods and systems included in the scope of the present invention may include any subset or all of the functional blocks shown in the specifically illustrated implementations by way of example, in any suitable order e.g. as shown. Flows may include all or any subset of the illustrated operations, suitably ordered e.g. as shown. tables herein may include all or any subset of the fields and/or records and/or cells and/or rows and/or columns described.

Any order of operations illustrated may be employed rather than the order shown.

Each method described typically comprises all or any subset of the described or illustrated operations:
Computational, functional or logical components described and illustrated herein can be implemented in various forms, for example, as hardware circuits such as but not limited to custom VLSI circuits or gate arrays or programmable hardware devices such as but not limited to FPGAs, or as software program code stored on at least one tangible or intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over several code sequences such as but not limited to objects, procedures, functions, routines and programs and may originate from several computer files which typically operate synergistically.

Each functionality or method herein may be implemented in software (E.g. for execution on suitable processing hardware such as a microprocessor or digital signal processor), firmware, hardware (using any conventional hardware technology such as Integrated Circuit technology) or any combination thereof.
. Functionality or operations stipulated as being software-implemented may alternatively be wholly or fully implemented by an equivalent hardware or firmware module and vice-versa. Firmware implementing functionality described herein , if provided, may be held in any suitable memory device and a suitable processing unit (aka processor) may be configured for executing firmware code. Alternatively, certain embodiments described herein may be implemented partly or exclusively in hardware in which case all or any subset of the variables, parameters, and computations described herein may be in hardware.

Any module or functionality described herein may comprise a suitably configured hardware component or circuitry. Alternatively or in addition, modules or functionality described herein may be performed by a general purpose computer or more generally by a suitable microprocessor, configured in accordance with: methods shown and described herein, or any suitable subset, in any suitable order, of the operations included in such methods, or in accordance with methods known in the art.

Any logical functionality described herein may be implemented as a real time application if and as appropriate and which may employ any suitable architectural option such as but not limited to FPGA, ASIC or DSP or any suitable combination thereof.

Any hardware component mentioned herein may in fact include either one or more hardware devices e.g. chips, which may be co-located or remote from one another.

Any method described herein is intended to include within the scope of the embodiments of the present invention also any software or computer program performing all or any subset of the method's operations, including a mobile application, platform or operating system e.g. as stored in a medium, as well as combining the computer program with a hardware device to perform all or any subset of the operations of the method.

Data can be stored on one or more tangible or intangible computer readable media stored at one or more different locations, different network nodes or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include apparatus which is primary, secondary, tertiary or off-line; which is of any type or level or amount or category of volatility, differentiation, mutability, accessibility, addressability, capacity, performance and energy use; and which is based on any suitable technologies such as semiconductor, magnetic, optical, paper and others.

### DETAILED DESCRIPTION OF CERTAIN EMBODIMENTS

A system and method are provided which support identity verification for an end-user. The method comprises sending a link directing an end-user to a web application operative for end-user identity verification, to an end-user's mobile phone, thereby to open an identity verification session when the end-user clicks on the link; and via the web application, activated by the end-user's clicking on the link, eliciting data from the end-user. The web application processes at least one image captured by at least one end-user's cellphone during the session or in real time or near real time, and for at least one image so captured, detects, and communicates to the end-user that the image is of unsatisfactory quality.

For example, frames may be processed in less than 100 or less than 200 or less than 300 or less than 400 or less than 500 milliseconds (including communication to the front-end SDK) to give the end user a near real time experience.

Any criterion for quality may be used, or several such criteria e.g. all or any subset of: whether an object of the expected type (e.g. face, ID document, form, certain type of ID document) is present at all, whether the object is fully within the field of view, blurriness, darkness, presence of reflection, and so forth.

Any suitable technology may be used to process (typically in real time or near real time) captured images, e.g. a live video stream, and to identify quality therein. For example a neural network or classifier may be trained to identify quality. The training set/s may include all or any combination of the following subsets of images, suitably labelled e.g. by human taggers, or automatically:
1. a subset of good images which typically include a bounding box of the id location and size. Typically good images have all of the following characteristics: an object of the expected type (e.g. face, ID document, form, certain type of ID document) is present, the object is fully within the field of view, no blurriness or reflection or glare present, no darkness or over-illumination.
2. a subset of images that are blurry but, typically, have a clear ID inside with a bounding box location and size
3. a subset of images that are too dark but, typically, have a clear id with a bounding box
4. a subset of images with reflections that, typically, prevent us from reading the text. typically, have a clear id image and bounding box around it.
5 a subset of non ids- images without any id inside, and/or images with cut or cropped id's inside, utility bills / business cards / other documents or objects that are not the expected type of object (say id/dl/passports/visa cards).

Alternatively or in addition, analytic methods of quantifying quality may be employed.

Methods for quantifying reflection are described e.g. in co-owned Publication US 10,255,495.

Shininess may be detected in an image document e.g. as described in co-owned published pct patent application WO2016005968A3, entitled *"System and method for quantifying reflection e.g. when analyzing laminated documents".*

Any suitable face detection or recognition technology may be used. Face detection may be performed using object-class detection technology, where the task is to find locations and/or sizes of objects in an image that belong to the class of frontal human faces. Conventional technologies for this task may employ the genetic algorithm and/or eigen-face technique.

ID document recognition or form recognition may for example be as per co-owned patent application WO 2016/139653.

Also, machine learning, deep learning, neural networks etc. may be employed to determine whether images are or are not of unsatisfactory quality e.g. by training a classifier on examples of images which, in the past, were successfully or unsuccessfully, respectively, used to verify an end users' identity.

Typically, the user starts a session, which typically includes live video, to capture their ID. During the session, frames captured from the live video are sent to a backend service that processes each captured frame, e.g. using a Neural Network aka NN. The NN engine typically determines, and indicates to the user (typically in less than one second per frame) whether an ID was or was not identified in the image, and/or whether the ID, if any, has quality issues such as all or any subset of: blurriness, reflection or darkness. These indications are presented e.g. displayed to user, typically in real-time.

This method advantageously elicits, from an end-user having a mobile phone with a high quality camera, images via which verification of the end-user's identity may be accomplished, including using the end-user's mobile phone's high quality camera to capture the images, without requiring the end-user to download a cell app.

An end-user may be prompted to choose an ID type (e.g. driving license, passport, etc.) and a country which issued the ID (e.g. France, Egypt etc.), from respective menus.

The end-user may be prompted to choose an upload method (either continue to desktop, or redirect to mobile).

In a capture-by mobile stage, the end-user is typically prompted to open her mobile camera, and scan a QR code presented on the screen. The QR code may be sensed by the phone using its camera and may, according to certain embodiments, provide a link to related digital content, typically a URL.

The end-user may be prompted to enter her or his mobile number, and responsively, receives by SMS (e.g.) a link to a mobile authentication flow.

The mobile authentication flow typically provides suitable prompts, and feedback, to the end-user.

The end-user is typically prompted to place the front side of his ID within a displayed rectangular outline, and click.

The end user typically is given the option to select cropping, uploading the file or recapturing. The end user may be given an option to "Drop photo file here to upload".

If the system does not detect an ID, the end-user is typically urged to make sure the ID document is readable, and within the displayed rectangular outline.

The end-user is then typically prompted to effect a "selfie capture" e.g. by ensuring her or his face fills the rectangular outline, and then clicking. The end user typically is given the option to select cropping, uploading the file, or recapturing.

The end-user may be given an option of either cropping, or clicking ok.

Typically, the end-user is prompted, when capturing a selfie and/or a document image, to avoid reflections.

The end-user may be prompted to change her or his distance from the camera, if the selfie is unsatisfactory. The end-user may be given indicators, such as a green/red indicator (which may be arranged around the displayed rectangular outline), if her/his face does/does not fill the displayed rectangular outline and/or if no face is detected at all (which may occur e.g. if the camera is positioned to image the room rather than the user's face). More generally, the green indicator typically indicates that the image is satisfactory, whereas the red indicator indicates a deficient image e.g. any of the above deficiencies (which are also stipulated in a natural language legend such as "your face is blurry - try to improve lighting", "only one face, not several people's faces" if plural faces are detected, and so forth.

If image quality is unsatisfactory e.g. blurry, the end-user is typically prompted to adjust the illumination in her or his environment.

The end-user is typically thanked for submitting a request for identity verification, if the session is successful in capturing the end-users selfie and ID document (typically from both front and back sides), and is otherwise typically informed that the session was unsuccessful.

It is appreciated that the above types of images of unsatisfactory quality e.g. plural faces rather than one, presence of reflection, face too far from camera, face not positioned within the rectangular outline, no face detected and so forth, are merely examples of types of images of unsatisfactory quality; other examples are possible, and alternatively or in addition, any subset of the types described above, rather than all types described above, may be detected.

Any suitable image processing may be used to detect the above types of images of unsatisfactory quality. For example, to detect blurriness, a Fast Fourier Transform may be computed to determine which frequencies are present in the image. A below-threshold amount of high frequencies indicates a blurry image. Also, if an image is converted into HSV format, the V value is indicative of brightness and over/under threshold V values are thus indicative of an image which is too bright or not bright enough.

Any suitable online warning to the end-user may be provided e.g. to the end-user's mobile phone e.g. via a web application entered by the end-user, e.g. during a session established thereby, e.g. responsive to a link sent to the user as described herein.

It is appreciated that the red/green indicator described above, is but one example of possible binary indicators having respective "unsatisfactory" and "satisfactory" values.

It is appreciated that provision of a Quick Response (QR) code which is then captured by the end-user's mobile phone's camera as described above, is but one alternative embodiment. Alternatively, any other technology may be used for directing end-users to, or launching, a web application configured to have all or any subset of the functionalities described above. For example, alternatively or in addition, Near Field Communication (NFC) may be used to transmit data between an NFC tag which may use embedded chips, and an NFC-enabled device e.g. smartphone/cellphone or tablet. In this embodiment, the NFC tag may get a "tap" from the NFC-enabled smartphone.

According to certain embodiments, during the session, a human operator views at least one image sent or uploaded by at least one end-user, during the session, and the human operator communicates with the at least one end-user, during the session e.g. in order to provide technical support.

According to certain embodiments, plural web applications configured as above, e.g. a community of web applications, receive image processing services from a single server.

A particular advantage of certain embodiments is that feedback regarding image quality may be provided to an end-user seeking to verify her identity, online or while an identity verification session is ongoing or within just a few seconds e.g. 10 seconds or less.

Another particular advantage of certain embodiments is that capabilities herein are obtainable without installations and/or or with minimum size sdk e.g. a few dozen KB instead of over one MB. It is appreciated that whereas NN sizes may be hundreds of MB, the neural networks are deployed on the cloud rather than on the front end, according to certain embodiments herein.

A smart document capturing system, e.g. for web/mobile SDK, according to an example embodiment, is now described in detail. Any aspect of or teaching regarding this system may be combined with any aspect of or teaching regarding any embodiment elsewhere shown and described herein. Smart SDK document capturing functionality is typically provided, to improve conversion rates and/or reduce frustration, thus enhancing the user experience. The SDK may allow the users to manually capture images, allowing the user to perform or interact with all or any subset of
the following:
- Select image file from library/camera/file system
- Open a camera session (web mobile or desktop)
- Capture an image (for document capturing or a selfie)
- Cropping functionality
- Make use of JSONGenerator
- Make use of formDataGenerator

Smart document capturing typically performs all or any subset of the following, e.g. by image processing:
- Identify ID objects and lock on them (e.g., typically, to prevent acceptance of general rectangles or business cards)
- quality checks such as but not limited to all or any subset of: Blur detection, Dark environment detection and Reflection detection.

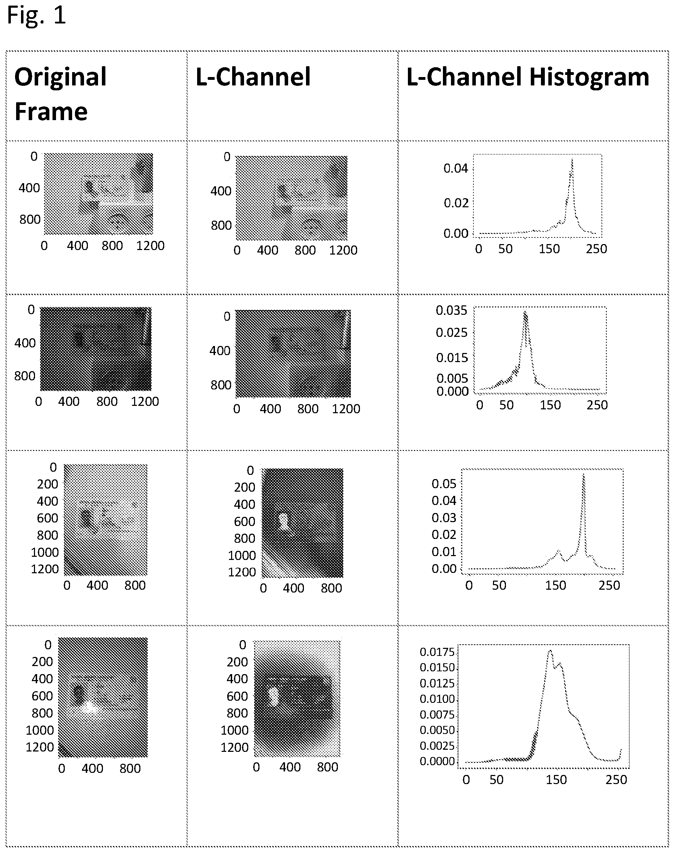

Fig. 1 is a table showing example frames (aka Original Frame), perhaps representing respective end-user attempts to image her or his ID document, and for each, its L-Channel and L-Channel Histogram, where L is typically a component in the HSL (hue, saturation, lightness) color coordinate system which may be used to represent frame pixels' color value.

The SDK may be operative to provide all or any subset of the following functionalities:
- Auto image capturing - after e.g. triggered by detection and quality assurance, for the frame representing the end-user's ID document
- Uploading image files e.g. from file dialog box
- Cropping images
- Taking pictures of documents or selfies
- Generating JSON or FormData objects for at least one (relevant) images

The system may comprise a hybrid, server-side/front end solution. To achieve maximum accuracy, the SDK may use one or more Neural Networks (NN) on the server side. Images from the front end may be sent in real time, typically one after the other, to the server for evaluation. Once the neural network/s accept/s the frame, the user is, typically, notified that the image is being captured and the front-end SDK, typically subsequently, typically automatically triggered, captures the image.

All or any subset of the following advantages may be achieved:
- Light front end - No smart module needs be downloaded to the front end, thereby to achieve slimness from the end-user's perspective.
- High accuracy - By using heavy Neural Networks with strong servers
- Auto updates - Updates and improvements need not be applied on the front-end App
- Multi-platform - API to the servers can be built from web or native apps.

Any functionality described herein may be provided as an SDK for webservice providers whose onboarding functionality requires capturing ID documents of their end users. The architecture may include both front-end SDK and back-end SDK. The front end typically sends frames for evaluation to the backend. The back end detects, e.g. via neuro networks, presence of IDs and checks whether quality of the ID image is sufficient. If so, the image may be sent directly to further processing by a document verification system, e.g. AU10TIX's BOS (Back Office Service) or any other typically online system for ID document image authentication. Alternatively, the image may be sent to the front-end SDK.

It is appreciated that the architecture allows plural webservice providers to onboard their respective end-users and to all use a single online ID document authentication service. Thresholds, timeouts, retries and any other desired parameter may be configured differently, for/by different webservice providers.

Features may include all or any subset of the following:
1. Detect ID vs Non-ID rectangles: Onboarding is improved by a detector that allows end user requests for ID verification to be removed even before sending them to further processing at (say) BOS if the requests are irrelevant, since the image sent in is not an ID or is not a face, or is of insufficient quality. This detector may for example use Deep Learning to detect IDs. If the ID is cut off (e.g. if the end-user failed to position the entire ID within her or his camera's field of view), for example, it is desirable not to capture the image and not to send such an image for further document verification processing. Instead, the user can be prompted to position her or his ID fully inside the frame. After basic detection indicating whether the desired object (e.g. a given ID document or form, or a face) is present (and fully present), an image quality test may begin. The detector may also supply bounding box coordinates for auto cropping the image.
2. Face detection: If onboarding includes sending in a selfie, the SDK may detect faces to ensure end-users are not sending non-relevant images for selfie verification. If no face is detected, the SDK may, for example, show a notification to prevent the user from sending this image. The hosting app may, for example, decide whether to allow sending an image without a face to the document verification system or not.
3. Quality Checks: Quality detectors filter out requests (e.g. images) that are not good enough before sending to (say) BOS, which is cost effective, since every processing request in (say) BOS has a cost. Quality checks may include all or any subset of the following:
   a. If there are a reflection on the card or the ID as imaged, the detector will not allow the image to be sent e.g. will not allow the SDK to capture the image
   b. If lighting conditions are not good enough such that the image is blurry or grainy, the detector will not allow the SDK to capture an image.
   c. If the image is not in full focus e.g. document text is unreadable, the detector will not allow the SDK to capture the image.
4. Auto Capture: typically, If the ID detector has detected an ID in a frame, and all the quality detectors approve that frame, the auto capture may choose this frame which may then be selected by the front-end SDK or transferred to (say) BOS.
5. Manual cropping: alternatively, or in addition to SDK auto capturing capabilities, manual capturing by end user may be supported, in which case a frame (e.g. from live video during a session) may be sent to analysis at the back-end SDK and may return with suitable notifications (re document present yes/no, quality sufficient yes/no) and cropping coordinates.
6. Cropping: typically, the back-end SDK supplies coordinates for cropping functionality. The front-end SDK may show a bounding box for auto cropping. According to certain embodiments, the end user can then choose to change the corners of the bounding box manually to improve the cropped result.
7. Configurations to the back-end allows functionality to change, e.g. to be configured differently for each of various web services all using the system herein, thereby to improve user experience and/or behavior of the SDK. For example, each detector's threshold may be adjustable. This may be the case for all or any subset of the following detectors: ID detector, Reflections detector, Dark detector, Blurriness detector, Face detector, form detector.
   b. Timeouts - To start the scan there may be a timeframe, to prevent sending frames in vain. To end the session there may be a time frame that can be adjusted.
   c. Retries - each user may be entitled to send session requests up to N times, where N may be adjustable per web service using the system herein.
8. Performance: The SDK typically supports 3G/4G/5G networks.
9. API and JSON response may be responsible for communication between front and back-end SDKs. Each frame sent to the back-end may return a response with all of any subset of the following JSON values:
   For Document capture:
      ∘ ID status - GOOD / BAD / NO ID
      ∘ ID coordinates - (x1, y1, x2, y2)
      ∘ Blur status - GOOD / BLUR
      ∘ Blur score: XX
      ∘ Reflection status - GOOD / REFLECT
      ∘ Reflection score: XX
      ∘ Dark status - GOOD / DARK
      ∘ Dark score: XX
   For Face detection:
      - Face status - DETECTED / NOT DETECTED
      - BBOX - (x1, y1, x2, y2)
10. UI: The UI may show an avatar bounding box e.g. rectangle e.g. on the screen display of the end-user's mobile phone, so the user may place his ID within the box or rectangle. The call to action to place the ID in the box or rectangle may be shown to the end-user, until the SDK has detected an ID (say).

If the ID is detected and all quality checks are good, the image may be auto captured, and a bounding box may appear to show the end user the frame that was taken and cropped. The user is typically able to manually change the cropping of the image. The hosting app may send this image and send for processing. Or, the SDK may send the image directly for processing in BOS. The choice between these options may be made by the web service doing the onboarding.

If no ID was detected until time out, a message may be shown e.g. "too dark" or "No ID was detected" and/or "please make sure you have enough light in the room" and/or "Would you like to try again?"

After n e.g. 3 times (typically n can be configured), a suitable message may be shown e.g. "No ID was detected. Please contact support to continue".

If quality checks are not good, a suitable notification may appear e.g. "avoid reflections", "Blurred Image", or "Too Dark". If the user does not fix the quality until timeout, the session may end.

A manual button may be available to the user, via which the end-user may force the app to take the image. In that case the image is typically processed, and responsively, a notification will be shown to the end user. The end user can, according to some embodiments, force the app to send his image for processing.

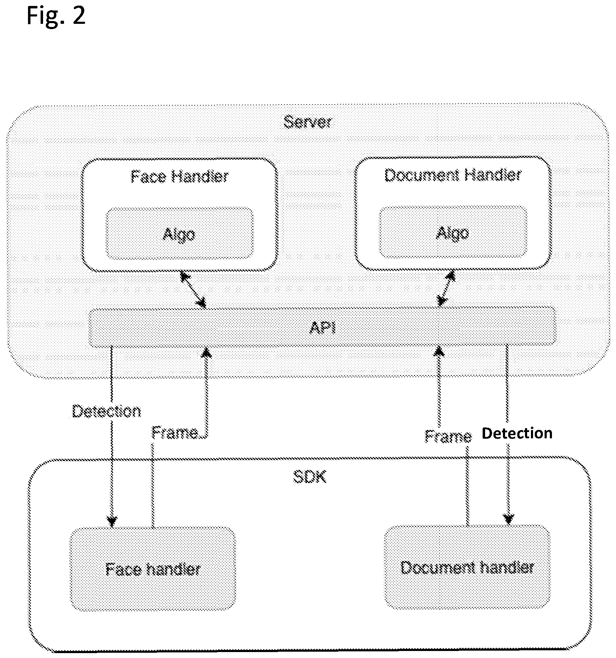

Fig. 2 is an example document capture software architecture. All or any subset of the illustrated blocks may be provided. Whether in the architecture of Fig. 2 or in any other architecture, it is appreciated that any suitable communication and integration may be provided, between the SDK and the algorithmic functionalities described herein. For example, communication between the SDK and the server configured to generate algorithmic analytics described herein (e.g. quality indicators, ID-non ID, face/not face, etc.) may be carried under (say) HTTPs (e.g. http2(for improved response time) protocol and use REST API. More generally, any suitable protocol may be used for communicating with the server, HTTP2 being but an example.

The server may expose main component/s such as document capture and/or face detection. The server side may expose two entry points, one for each capability. The server and SDK may communicate via REST API. The communication protocol may be based on HTTPS requests.

The SDK may open a camera session (e.g. with end user's cellphone camera in video mode) and start sending frames. Each frame may be transferred separately and may wait for a response. Server runtimes may be determined by process and communication times.

OS-level virtualization may be used to deliver software to implement functionalities herein (e.g. API algorithmic capabilities for document capture and/or face detection), in packages e.g. Docker containers, which may be: isolated from one another; may bundle their own software, libraries and configuration files; may communicate with one other via defined channels; may be run by a single operating system kernel. An SDK may expose document capture and/or face detection capabilities e.g. by sending single frames and returning analytics to the SDK client.

The SDK may for example be JavaScript based. The SDK may expose all or any subset of the following capabilities:
- Document capture:
   ∘ Open camera session
   ∘ Single frame capturing
   ∘ Send a single frame to the server and receive document location and analytics
- Face detection:
   ∘ Open camera session
   ∘ Single frame capturing
   ∘ Send a single frame to the server and receive face detection and location
- Auxiliary function to create instance that fits the API.

The final product may comprise webpacked python code which may be wrapped in an image docker.

It is appreciated that terminology such as "mandatory", "required", "need" and "must" refer to implementation choices made within the context of a particular implementation or application described herewithin for clarity and are not intended to be limiting since in an alternative implantation, the same elements might be defined as not mandatory and not required or might even be eliminated altogether.

Components described herein as software may, alternatively, be implemented wholly or partly in hardware and/or firmware, if desired, using conventional techniques, and vice-versa. Each module or component or processor may be centralized in a single physical location or physical device or distributed over several physical locations or physical devices.

Included in the scope of the present disclosure, inter alia, are electromagnetic signals in accordance with the description herein. These may carry computer-readable instructions for performing any or all of the operations of any of the methods shown and described herein, in any suitable order including simultaneous performance of suitable groups of operations as appropriate. Included in the scope of the present disclosure, inter alia, are machine-readable instructions for performing any or all of the operations of any of the methods shown and described herein, in any suitable order; program storage devices readable by machine, tangibly embodying a program of instructions executable by the machine to perform any or all of the operations of any of the methods shown and described herein, in any suitable order i.e. not necessarily as shown, including performing various operations in parallel or concurrently rather than sequentially as shown; a computer program product comprising a computer useable medium having computer readable program code, such as executable code, having embodied therein, and/or including computer readable program code for performing, any or all of the operations of any of the methods shown and described herein, in any suitable order; any technical effects brought about by any or all of the operations of any of the methods shown and described herein, when performed in any suitable order; any suitable apparatus or device or combination of such, programmed to perform, alone or in combination, any or all of the operations of any of the methods shown and described herein, in any suitable order; electronic devices each including at least one processor and/or cooperating input device and/or output device and operative to perform e.g. in software any operations shown and described herein; information storage devices or physical records, such as disks or hard drives, causing at least one computer or other device to be configured so as to carry out any or all of the operations of any of the methods shown and described herein, in any suitable order; at least one program pre-stored e.g. in memory or on an information network such as the Internet, before or after being downloaded, which embodies any or all of the operations of any of the methods shown and described herein, in any suitable order, and the method of uploading or downloading such, and a system including server/s and/or client/s for using such; at least one processor configured to perform any combination of the described operations or to execute any combination of the described modules; and hardware which performs any or all of the operations of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any operation or functionality described herein may be wholly or partially computer-implemented e.g. by one or more processors. The invention shown and described herein may include (a) using a computerized method to identify a solution to any of the problems or for any of the objectives described herein, the solution optionally include at least one of a decision, an action, a product, a service or any other information described herein that impacts, in a positive manner, a problem or objectives described herein; and (b) outputting the solution.

The system may if desired be implemented as a web-based system employing software, computers, routers and telecommunications equipment as appropriate.

Any suitable deployment may be employed to provide functionalities e.g. software functionalities shown and described herein. For example, a server may store certain applications, for download to clients, which are executed at the client side, the server side serving only as a storehouse. Any or all functionalities e.g. software functionalities shown and described herein may be deployed in a cloud environment. Clients e.g. mobile communication devices such as smartphones may be operatively associated with but external to the cloud.

The scope of the present invention is not limited to structures and functions specifically described herein and is also intended to include devices which have the capacity to yield a structure, or perform a function, described herein, such that even though users of the device may not use the capacity, they are if they so desire able to modify the device to obtain the structure or function.

Any "if -then" logic described herein is intended to include embodiments in which a processor is programmed to repeatedly determine whether condition x, which is sometimes true and sometimes false, is currently true or false and to perform y each time x is determined to be true, thereby to yield a processor which performs y at least once, typically on an "if and only if" basis e.g. triggered only by determinations that x is true and never by determinations that x is false.

Any determination of a state or condition described herein, and/or other data generated herein, may be harnessed for any suitable technical effect. For example, the determination may be transmitted or fed to any suitable hardware, firmware or software module, which is known or which is described herein to have capabilities to perform a technical operation responsive to the state or condition. The technical operation may for example comprise changing the state or condition or may more generally cause any outcome which is technically advantageous given the state or condition or data, and/or may prevent at least one outcome which is disadvantageous given the state or condition or data . Alternatively or in addition, an alert may be provided to an appropriate human operator or to an appropriate external system.

Features of the present invention, including operations, which are described in the context of separate embodiments may also be provided in combination in a single embodiment. For example, a system embodiment is intended to include a corresponding process embodiment and vice versa. Also, each system embodiment is intended to include a server-centered "view" or client centered "view", or "view" from any other node of the system, of the entire functionality of the system , computer-readable medium, apparatus, including only those functionalities performed at that server or client or node. Features may also be combined with features known in the art and particularly although not limited to those described in the Background section or in publications mentioned therein.

Conversely, features of the invention, including operations, which are described for brevity in the context of a single embodiment or in a certain order may be provided separately or in any suitable subcombination, including with features known in the art (particularly although not limited to those described in the Background section or in publications mentioned therein) or in a different order. "e.g." is used herein in the sense of a specific example which is not intended to be limiting. Each method may comprise all or any subset of the operations illustrated or described, suitably ordered e.g. as illustrated or described herein.

Devices, apparatus or systems shown coupled in any of the drawings may in fact be integrated into a single platform in certain embodiments or may be coupled via any appropriate wired or wireless coupling such as but not limited to optical fiber, Ethernet, Wireless LAN, HomePNA, power line communication, cell phone, Smart Phone (e.g. iPhone), Tablet, Laptop, PDA, Blackberry GPRS, Satellite including GPS, or other mobile delivery. It is appreciated that in the description and drawings shown and described herein, functionalities described or illustrated as systems and sub-units thereof can also be provided as methods and operations therewithin, and functionalities described or illustrated as methods and operations therewithin can also be provided as systems and sub-units thereof. The scale used to illustrate various elements in the drawings is merely exemplary and/or appropriate for clarity of presentation and is not intended to be limiting.

Any suitable communication may be employed between separate units herein e.g. wired data communication and/or in short-range radio communication with sensors such as cameras e.g. via WiFi, Bluetooth or Zigbee.

It is appreciated that implementation via a cellular app as described herein is but an example and instead, embodiments of the present invention may be implemented, say, as a smartphone SDK; as a hardware component; as an STK application, or as suitable combinations of any of the above.

Any processing functionality illustrated (or described herein) may be executed by any device having a processor, such as but not limited to a mobile telephone, set-top-box, TV, remote desktop computer, game console, tablet, mobile e.g. Laptop or other computer terminal, embedded remote unit, which may either be networked itself (may itself be a node in a conventional communication network e.g.) or may be conventionally tethered to a networked device (to a device which is a node in a conventional communication network or is tethered directly or indirectly/ultimately to such a node).

## Claims

1. A method supporting identity verification for an end-user, the method comprising:
sending a link, which directs an end-user to a software functionality, such as but not limited to a web application, native app/native sdk, web app desktop, web sdk, which is operative for end-user identity verification, to an end-user's mobile phone, thereby to open an identity verification session when the end-user clicks on the link; and
via the software functionality activated by the end-user's clicking on the link, eliciting data from the end-user,
wherein the software functionality processes at least one image captured by at least one end-user's cellphone during the session or in real time or near real time, and for at least one image so captured, detects, and communicates to the end-user that the image is of unsatisfactory quality
**characterized by** at least one of:
said data comprises an image of at least a portion of an ID document borne by the end-user; and/or
the software functionality processes at least one image captured by at least one end-user's cellphone during the session e.g. in real time or near real time, and for at least one image so captured, detects that the image is of satisfactory quality and, responsively, provides a binary indicator whose "satisfactory" value indicates to the end-user that the image is of satisfactory quality, thereby to encourage the end-user to confirm or upload the image to the software functionality; and/or
the software functionality sends to the end-user's mobile phone an image of a rectangular outline, during the session, within which an image of the end-user's face is to be positioned; and/or
the link is sent to the end-user's mobile phone via SMS.

2. The method according to claim 1 wherein said data comprises a selfie, imaged by the end-user's mobile phone's camera, of the end-user's face.

3. The method according to claim 1 wherein said data comprises an image of at least a portion of an ID document borne by the end-user.

4. The method according to claim 3 wherein said at least portion of the ID document includes the front and back sides of the ID document.

5. The method according to claim 1 wherein the software functionality processes at least one image captured by at least one end-user's cellphone during the session e.g. in real time or near real time, and for at least one image so captured, detects that the image is of unsatisfactory quality and, responsively, sends to the user's cellphone, via said software functionality, within the session, a suggestion how to remedy the unsatisfactory quality of the image.

6. The method according to claim 1 wherein the software functionality processes at least one image captured by at least one end-user's cellphone during the session e.g. in real time or near real time, and for at least one image so captured, detects that the image is of unsatisfactory quality and, responsively, provides a binary indicator whose "unsatisfactory" value indicates to the end-user that the image is of unsatisfactory quality.

7. The method according to claim 1 wherein the software functionality processes at least one image captured by at least one end-user's cellphone during the session e.g. in real time or near real time, and for at least one image so captured, detects that the image is of satisfactory quality and, responsively, provides a binary indicator whose "satisfactory" value indicates to the end-user that the image is of satisfactory quality, thereby to encourage the end-user to confirm or upload the image to the software functionality.

8. The method according to claim 1 wherein the software functionality sends to the end-user's mobile phone an image of a rectangular outline, during the session, within which an image of the end-user's face is to be positioned.

9. The method according to claim 8 wherein the software functionality captures an image uploaded by the user, determines, for at least one image so captured, whether a face is presented in the image, and if so, sends a warning to the end-user's mobile phone, during the session, if the end-user's face is not positioned within the rectangular outline.

10. The method according to claim 1 wherein the link is sent to the end-user's mobile phone via SMS.

11. The method according to claim 1 wherein the software functionality comprises an application.

12. The method according to claim 1 wherein the software functionality comprises an SDK.

13. The method according to claim 1 wherein the software functionality comprises Web Desktop software.

14. The method according to claim 1 wherein the software functionality comprises Web Mobile software.

15. The method according to claim 1 wherein the software functionality comprises Native mobile Ios.

16. The method according to claim 1 wherein the software functionality comprises Android software.

17. A computer program product, comprising a non-transitory tangible computer readable medium having computer readable program code embodied therein, said computer readable program code adapted to be executed to implement any of the methods of claims 1 - 16.

18. A system comprising at least one hardware processor configured to carry out the operations of any of the methods of claims 1 - 16.

## Patentansprüche

1. Verfahren zum Unterstützen von Identitätsverifikation für einen Endbenutzer, wobei das Verfahren Folgendes umfasst:
Senden eines Links, der einen Endbenutzer zu einer Softwarefunktionalität leitet, wie etwa unter anderem einer Webanwendung, einer nativen App/einem nativen SDK, einem Web-App-Desktop, einem Web-SDK, der/die/das zur Endbenutzeridentitätsverifikation betreibbar ist, an ein Mobiltelefon des Endbenutzers, um dadurch eine Identitätsverifikationssitzung zu öffnen, wenn der Endbenutzer auf den Link klickt; und
über Aktivierung der Softwarefunktionalität durch Klicken auf den Link durch den Endbenutzer, Erheben von Daten von dem Benutzer,
wobei die Softwarefunktionalität mindestens ein Bild verarbeitet, das durch mindestens ein Handy des Endbenutzers während der Sitzung oder in Echtzeit oder nahezu Echtzeit erfasst wird, und für das mindestens eine so erfasste Bild detektiert und dem Endbenutzer kommuniziert, dass das Bild von nicht zufriedenstellender Qualität ist,
**gekennzeichnet durch** mindestens eines des Folgenden:
die Daten umfassen ein Bild von mindestens einem Abschnitt eines ID-Dokuments, das zu dem Endbenutzer gehört; und/oder
die Softwarefunktionalität verarbeitet mindestens ein Bild, das durch mindestens ein Handy des Endbenutzers während der Sitzung erfasst wird, z. B. in Echtzeit oder nahezu Echtzeit, und detektiert für mindestens ein so erfasstes Bild, dass das Bild von zufriedenstellender Qualität ist, und stellt als Reaktion einen binären Indikator bereit, dessen Wert "Zufriedenstellend" dem Endbenutzer angibt, dass das Bild von zufriedenstellender Qualität ist, um so den Endbenutzer anzuregen, das Bild zu bestätigen oder auf die Softwarefunktionalität hochzuladen; und/oder
die Softwarefunktionalität sendet während der Sitzung ein Bild eines rechteckigen Umrisses, innerhalb welchen ein Bild des Gesichts des Endbenutzers zu positionieren ist, an das Mobiltelefon des Endbenutzers; und/oder
der Link wird über SMS an das Mobiltelefon des Endbenutzers gesendet.

2. Verfahren nach Anspruch 1, wobei die Daten ein Selfie des Gesichts des Benutzers umfassen, das durch die Kamera des Mobiltelefons des Endbenutzers aufgenommen wurde.

3. Verfahren nach Anspruch 1, wobei die Daten ein Bild von mindestens einem Abschnitt eines ID-Dokuments, das zu dem Endbenutzer gehört, umfassen.

4. Verfahren nach Anspruch 3, wobei der mindestens eine Abschnitt des ID-Dokuments die Vorder- und Rückseite des ID-Dokuments beinhaltet.

5. Verfahren nach Anspruch 1, wobei die Softwarefunktionalität mindestens ein Bild verarbeitet, das durch mindestens ein Handy des Endbenutzers während der Sitzung erfasst wird, z. B. in Echtzeit oder nahezu Echtzeit, und für mindestens ein so erfasstes Bild detektiert, dass das Bild von nicht zufriedenstellender Qualität ist, und als Reaktion innerhalb der Sitzung über die Softwarefunktionalität einen Vorschlag an das Handy des Benutzers sendet, wie die nicht zufriedenstellende Qualität des Bilds zu beheben ist.

6. Verfahren nach Anspruch 1, wobei die Softwarefunktionalität mindestens ein Bild verarbeitet, das durch mindestens ein Handy des Endbenutzers während der Sitzung erfasst wird, z. B. in Echtzeit oder nahezu Echtzeit, und für mindestens ein so erfasstes Bild detektiert, dass das Bild von nicht zufriedenstellender Qualität ist, und als Reaktion einen binären Indikator bereitstellt, dessen Wert "Nicht zufriedenstellend" dem Endbenutzer angibt, dass das Bild von nicht zufriedenstellender Qualität ist.

7. Verfahren nach Anspruch 1, wobei die Softwarefunktionalität mindestens ein Bild verarbeitet, das durch mindestens ein Handy des Endbenutzers während der Sitzung erfasst wird, z. B. in Echtzeit oder nahezu Echtzeit, und für mindestens ein so erfasstes Bild detektiert, dass das Bild von zufriedenstellender Qualität ist, und als Reaktion einen binären Indikator bereitstellt, dessen Wert "Zufriedenstellend" dem Endbenutzer angibt, dass das Bild von zufriedenstellender Qualität ist, um so den Endbenutzer anzuregen, das Bild zu bestätigen oder auf die Softwarefunktionalität hochzuladen.

8. Verfahren nach Anspruch 1, wobei die Softwarefunktionalität während der Sitzung ein Bild eines rechteckigen Umrisses, innerhalb welchen ein Bild des Gesichts des Endbenutzers zu positionieren ist, an das Mobiltelefon des Endbenutzers sendet.

9. Verfahren nach Anspruch 8, wobei die Softwarefunktionalität ein durch den Benutzer hochgeladenes Bild erfasst, für mindestens ein so erfasstes Bild bestimmt, ob in dem Bild ein Gesicht dargestellt ist, und wenn dies der Fall ist, während der Sitzung eine Warnung an das Mobiltelefon des Endbenutzers sendet, wenn das Gesicht des Endbenutzers nicht innerhalb des rechteckigen Umrisses positioniert ist.

10. Verfahren nach Anspruch 1, wobei der Link über SMS an das Mobiltelefon den Endbenutzers gesendet wird.

11. Verfahren nach Anspruch 1, wobei die Softwarefunktionalität eine Anwendung umfasst.

12. Verfahren nach Anspruch 1, wobei die Softwarefunktionalität ein SDK umfasst.

13. Verfahren nach Anspruch 1, wobei die Softwarefunktionalität Web-Desktop-Software umfasst.

14. Verfahren nach Anspruch 1, wobei die Softwarefunktionalität Web-Mobil-Software umfasst.

15. Verfahren nach Anspruch 1, wobei die Softwarefunktionalität natives mobiles iOS umfasst.

16. Verfahren nach Anspruch 1, wobei die Softwarefunktionalität Android-Software umfasst.

17. Computerprogrammprodukt, umfassend ein nicht transitorisches greifbares computerlesbares Medium, das darin integrierten computerlesbaren Programmcode aufweist, wobei der computerlesbare Programmcode dazu ausgelegt ist, ausgeführt zu werden, um eines der Verfahren der Ansprüche 1-16 umzusetzen.

18. System, umfassend mindestens einen Hardwareprozessor, der dazu konfiguriert ist, die Vorgänge nach einem der Verfahren der Ansprüche 1-16 auszuführen.

## Revendications

1. Procédé de prise en charge de la vérification d'identité d'un utilisateur final, le procédé comprenant :
l'envoi d'un lien, qui dirige un utilisateur final vers un fonctionnalité logicielle, telle que, mais sans s'y limiter, une application Web, une application native/un SDK natif, une application Web de bureau, un SDK Web, qui est opérationnelle pour la vérification de l'identité de l'utilisateur final, au téléphone portable d'un utilisateur final, pour ainsi ouvrir une session de vérification d'identité lorsque l'utilisateur final clique sur le lien ; et
via la fonctionnalité logicielle activée par le clic de l'utilisateur final sur le lien, l'obtention des données de l'utilisateur final,
dans lequel la fonctionnalité logicielle traite au moins une image capturée par au moins un téléphone portable d'un utilisateur final pendant la session ou en temps réel ou quasi réel, et pour au moins une image ainsi capturée, détecte et communique à l'utilisateur final que l'image est de qualité insatisfaisante
**caractérisé par** au moins l'un des éléments suivants :
lesdites données comprennent une image d'au moins une partie d'un document d'identité porté par l'utilisateur final ; et/ou
la fonctionnalité logicielle traite au moins une image capturée par au moins un téléphone portable d'utilisateur final pendant la session, par exemple en temps réel ou quasi réel, et pour au moins une image ainsi capturée, détecte que l'image est de qualité satisfaisante et, en réponse, fournit un indicateur binaire dont la valeur « satisfaisante » indique à l'utilisateur final que l'image est de qualité satisfaisante, encourageant ainsi l'utilisateur final à confirmer ou à télécharger l'image vers la fonctionnalité logicielle ; et/ou
la fonctionnalité logicielle envoie au téléphone portable de l'utilisateur final une image d'un contour rectangulaire, pendant la session, dans lequel une image du visage de l'utilisateur final doit être positionnée ; et/ou
le lien est envoyé au téléphone portable de l'utilisateur final par SMS.

2. Procédé selon la revendication 1, dans lequel lesdites données comprennent un selfie, imagé par la caméra du téléphone portable de l'utilisateur final, du visage de l'utilisateur final.

3. Procédé selon la revendication 1, dans lequel lesdites données comprennent une image d'au moins une partie d'un document d'identité porté par l'utilisateur final.

4. Procédé selon la revendication 3, dans lequel ladite au moins une partie du document d'identité comprend les faces avant et arrière du document d'identité.

5. Procédé selon la revendication 1, dans lequel la fonctionnalité logicielle traite au moins une image capturée par au moins un téléphone portable d'un utilisateur final pendant la session, par exemple en temps réel ou quasi réel, et pour au moins une image ainsi capturée, détecte que l'image est de qualité insatisfaisante et, en réponse, envoie au téléphone portable de l'utilisateur, via ladite fonctionnalité logicielle, pendant la session, une suggestion sur la manière de remédier à la qualité insatisfaisante de l'image.

6. Procédé selon la revendication 1, dans lequel la fonctionnalité logicielle traite au moins une image capturée par au moins un téléphone portable d'un utilisateur final pendant la session, par exemple en temps réel ou quasi réel, et pour au moins une image ainsi capturée, détecte que l'image est de qualité insatisfaisante et, en réponse, fournit un indicateur binaire dont la valeur « insatisfaisante » indique à l'utilisateur final que l'image est de qualité insatisfaisante.

7. Procédé selon la revendication 1, dans lequel la fonctionnalité logicielle traite au moins une image capturée par au moins un téléphone portable d'un utilisateur final pendant la session, par exemple en temps réel ou quasi réel, et pour au moins une image ainsi capturée, détecte que l'image est de qualité satisfaisante et, en réponse, fournit un indicateur binaire dont la valeur « satisfaisante » indique à l'utilisateur final que l'image est de qualité satisfaisante, encourageant ainsi l'utilisateur final à confirmer ou à télécharger l'image vers la fonctionnalité logicielle.

8. Procédé selon la revendication 1, dans lequel la fonctionnalité logicielle envoie au téléphone portable de l'utilisateur final une image d'un contour rectangulaire, pendant la session, dans lequel une image du visage de l'utilisateur final doit être positionnée.

9. Procédé selon la revendication 8, dans lequel la fonctionnalité logicielle capture une image téléchargée par l'utilisateur, détermine, pour au moins une image ainsi capturée, si un visage est présenté dans l'image, et si tel est le cas, envoie un avertissement au téléphone portable de l'utilisateur final, pendant la session, si le visage de l'utilisateur final n'est pas positionné à l'intérieur du contour rectangulaire.

10. Procédé selon la revendication 1, dans lequel le lien est envoyé au téléphone portable de l'utilisateur final par SMS.

11. Procédé selon la revendication 1, dans lequel la fonctionnalité logicielle comprend une application.

12. Procédé selon la revendication 1, dans lequel la fonctionnalité logicielle comprend un SDK.

13. Procédé selon la revendication 1, dans lequel la fonctionnalité logicielle comprend un logiciel de bureau Web.

14. Procédé selon la revendication 1, dans lequel la fonctionnalité logicielle comprend un logiciel Web Mobile.

15. Procédé selon la revendication 1, dans lequel la fonctionnalité logicielle comprend un Ios mobile natif.

16. Procédé selon la revendication 1, dans lequel la fonctionnalité logicielle comprend un logiciel Android.

17. Produit de programme informatique, comprenant un support tangible non transitoire lisible par ordinateur dans lequel est incorporé un code de programme lisible par ordinateur, ledit code de programme lisible par ordinateur étant conçu pour être exécuté afin de mettre en œuvre l'un quelconque des procédés des revendications 1 à 16.

18. Système comprenant au moins un processeur matériel configuré pour exécuter les opérations de l'un quelconque des procédés des revendications 1 à 16.
